# EUROPÄISCHE PATENTSCHRIFT

(11) **EP 2 841 325 B1**
(45) Veröffentlichungstag und Bekanntmachung des Hinweises auf die Patenterteilung: **16.11.2016**
(21) Anmeldenummer: 13702900.5
(22) Anmeldetag: 29.01.2013
(51) Int. Cl.: B62D 15/02, B60W 30/06, B60W 50/00

(54) **VERFAHREN ZUM AUTONOMEN PARKEN EINES KRAFTFAHRZEUGS, FAHRERASSISTENZVORRICHTUNG ZUR DURCHFÜHRUNG DES VERFAHRENS, SOWIE KRAFTFAHRZEUG MIT DER FAHRERASSISTENZVORRICHTUNG**
METHOD TO AUTONOMOUSLY PARK A VEHICLE, SYSTEM TO CARRY OUT SAID METHOD, AS WELL AS A VEHICLE INCLUDING SAID SYSTEM
MÉTHODE POUR LE PARCAGE AUTOMATIQUE D'UN VÉHICULE, SYSTÈME CORRESPONDANT POUR METTRE EN OEUVRE LA MÉTHODE, ET VÉHICULE ÉQUIPÉ DUDIT SYSTÈME

(30) Priorität: 28.04.2012 DE 102012008858
(43) Veröffentlichungstag der Anmeldung: 04.03.2015
(73) Patentinhaber: Daimler AG, 70327 Stuttgart (DE)
(72) Erfinder: BONNET, Christophe, 70771 Leinfelden-Echterdingen (DE); HILLER, Andreas, 70563 Stuttgart (DE); KUENZEL, Gerhard, 71726 Benningen (DE); MOSER, Martin, 70736 Fellbach (DE); SCHIEMENZ, Heiko, 70597 Stuttgart (DE)
(74) Vertreter: JENSEN & SON
(86) Internationale Anmeldenummer: PCT/EP2013/000259
(87) Internationale Veröffentlichungsnummer: WO 2013/159845

(56) Entgegenhaltungen:
- WO-A1-2006/092370
- WO-A1-2011/154242
- DE-A1-102008 019 346
- JP-B2- 4 763 778

## Beschreibung

Die Erfindung betrifft ein Verfahren zur Durchführung eines autonomen Parkvorgangs eines Kraftfahrzeugs gemäß dem Oberbegriff des Patentanspruchs 1, eine Fahrerassistenzvorrichtung zur Durchführung des Verfahrens, sowie ein Kraftfahrzeug mit einer derartigen Fahrerassistenzvorrichtung.

Die Breite von Kraftfahrzeugen, insbesondere von Personenkraftwagen, hat in den letzten Jahren bzw. Jahrzehnten kontinuierlich zugenommen. Die Breite von Parklücken und Stellplätzen für Kraftfahrzeuge wurde dieser Entwicklung jedoch nicht angepasst. Hieraus ergibt sich das Problem, dass bei einem eingeparkten Kraftfahrzeug dessen Türen oftmals nur noch mit einem vergleichsweise kleinen Winkel geöffnet werden können, was das Verlassen des Kraftfahrzeugs für die Insassen erschwert.

Vor diesem Hintergrund wurden in den letzten Jahren automatische und autonome Lösungen entwickelt, bei denen die Insassen vor der Parklücke aussteigen können und dann über Funk das Einparken des Kraftfahrzeugs initiiert wird. Unter diesen Lösungen existieren solche, bei denen das Kraftfahrzeug lediglich gerade nach vorne und nach hinten bewegt werden kann, aber auch solche, bei denen das Kraftfahrzeug durch geeignete Sensorvorrichtungen die Parklücke und die Umgebung des Kraftfahrzeugs detektiert und automatisch unter Berechnung und Steuerung der Trajektorie in eine Parklücke einparken kann.

So beschreibt beispielsweise die DE 101 20 511 B4 eine Parkhilfevorrichtung mit einem Solllenkbetrag-Betriebsmittel zur Auffindung eines Lenkbetrags, der notwendig ist, um ein Fahrzeug in einen Parkplatz zu stellen, oder zur Auffindung eines Solllenkbetrags, der eine Lenkposition darstellt; ein automatisches Lenkmittel zum Betreiben eines realen Lenkbetrags des Fahrzeugs oder eines realen Lenkbetrags, der eine Lenkposition darstellt, um mit dem Solllenkbetrag überein zu stimmen; eine Fernsteuervorrichtung zum Befehlen des Zurückbewegens und Anhaltens des Fahrzeugs und ein

Betriebssteuermittel zum Zurückbewegen und Anhalten des Fahrzeugs entsprechend dem Befehl aus der Fernsteuervorrichtung.

Aus der EP 1 249 379 A2 ist ein Verfahren zum Verbringen eines Kraftfahrzeugs in eine Zielposition bekannt, wobei das Kraftfahrzeug in eine Startposition nahe der angestrebten Zielposition gebracht wird, nach einer ersten fahrerseitigen Aktivierung die Umgebung des Kraftfahrzeugs und zumindest zur Detektion der Zielposition fortlaufend abgetastet und die aktuelle Fahrzeugposition fortlaufend ermittelt wird, anhand der ermittelten Umgebungs- und Positionsinformationen Steuerinformationen für das Verbringen des Kraftfahrzeugs in die Zielposition ermittelt werden, nach einer zweiten fahrerseitigen Aktivierung von den Steuerinformationen abhängige Steuerbefehle an den Antriebsstrang und/oder die Bremsanlage und/oder die Lenkung des Kraftfahrzeuges abgegeben werden, wodurch das Kraftfahrzeug fahrerunabhängig in die Zielposition fährt.

Und in der DE 10 2009 041 587 A1 wird eine Fahrerassistenzeinrichtung beschrieben, deren Steuereinrichtung dazu ausgelegt ist, Steuersignale an eine Antriebs- und Lenkvorrichtung des Kraftfahrzeugs auszugeben, die ein Durchführen eines autonomen Parkvorgangs veranlassen. Die Steuereinrichtung ist auch dazu ausgelegt, Befehle von einer Fernbedienung zu empfangen und nach Empfangen eines vorbestimmten Unterbrechungsbefehls einen bereits begonnenen Parkvorgang des Kraftfahrzeugs zu unterbrechen. Zumindest eine Kamera ist mit der Steuereinrichtung gekoppelt und gewinnt Bilddaten über einen Umbebungsbereich des Kraftfahrzeugs. Die Steuereinrichtung sendet Signale an die Fernbedienung, die durch die Kamera gewonnenen Bilddaten oder daraus berechnete Bilddaten umfassen.

Videos und einige schriftliche Informationen über die Funktionsweise von Prototypen autonomer Systeme sind im Internet einsehbar unter www.youtube.com/watch?v=hIL_pl7jxGQ und www.youtube.com/watch?v=KfUBTOTp2Fw (Remote Park Assist, BMW); https://www.volkswagen-mediaservices.com/medias_publish/ms/content/de/pressemitteilungen/2008/04/21/weltpre miere_auf_der.standard.gid-oeffentlichkeit.html, http://heise.de/-449087, http://www.youtube.com/watch?v=A6ef1kzkr5l (Park Assist Vision, VW); http://www.valeo.com/de/pressemitteilungen/details.html?id=195, http://www.youtube.com/watch?v=aeRUkNRyycA (Park4U® Remote, Valeo).

Mehrere technische Entwicklungen, die in den vergangenen Jahren Einzug in Serienprodukte erhalten haben, unterstützen die Einführung entsprechender Systeme. So ermögliche eine elektrische Lenkunterstützung automatisches Lenken; eine elektronische Ansteuerung von Gas und Bremse, die elektrische Parkbremse, sowie elektrische Ansteuerung der Gangschaltung ermöglichen die autonome Regelung der Längsbewegung.

Parallel dazu erhalten Funkfernsteuerungen immer mehr Einzug in die Bewegung von Maschinen und Fahrzeugen im halböffentlichen Raum, z.B. bei Kränen, anderen Baumaschinen oder Rangierlokomotiven. Auch in der Automobilbranche sind Funksysteme mit entsprechender Sicherheitstechnologie zum Öffnen und Schließen weit verbreitet. Auch sind bereits Lösungen bekannt, bei denen mit Hilfe von Smartphones eine Ansteuerung von nicht Fahrzeugfunktionen wie Öffnen, Schließen, Blinken oder Hupen ermöglicht wird (My BMW Remote App. Flyer: "BMW CONNECTED DRIVE." Seite 9, 2011).

Die prototypisch vorgestellten autonomen Parksysteme mit Fernbedienung basieren in ihrem Bedienkonzept auf bestehenden automatischen Parksystemen. D.h. das Fahrzeug erkennt mit seiner Umfeldsensorik die Parklücke, plant eine Trajektorie und fährt diese Trajektorie basierend auf der Anforderung des Bedieners ab.

Dabei können jedoch nur Parkplätze in Situationen angefahren werden, die in dem System berücksichtigt sind. So können beispielsweise enge Parksituationen auf Privatparkplätzen damit zum Teil nicht unterstützt werden, da das System die gewünschte Endposition nicht bestimmen kann.

Aus der WO 2006092370 A1 ist ein Verfahren zur Unterstützung eines Fahrers beim Einparken eines Fahrzeugs bekannt, bei dem das Fahrzeug zunächst manuell in eine gewünschte Zielposition gefahren wird. Dort betätigt der Fahrer ein Bedienelement und startet somit die Speicherung der Zielposition. Danach fährt der Fahrer das Fahrzeug aus der Zielposition heraus, steigt aus dem Fahrzeug aus und leitet von außen mittels einer Fernbedienung einen Parkvorgang ein, bei dem das Fahrzeug autonom in die zuvor gespeicherte Zielposition gefahren wird.

Ein ähnliches Verfahren ist auch aus der JP 4763778 B2 bekannt. Bei diesem Verfahren fährt der Fahrer sein Fahrzeug ebenfalls in eine Parklücke bis zu einer gewünschten Zielposition hinein und dann aus der Parklücke wieder heraus, um danach auszusteigen und das Fahrzeug ferngesteuert, diesmal jedoch halbautomatisch, zurück in die Zielposition zu fahren. Die Zielposition wird dabei durch eine spezielle Folge von Fahreraktionen festgelegt. Diese spezielle Folge von Fahreraktionen besteht darin, dass der Fahrer an der Zielposition den Getriebegang in die Parkstellung schaltet und aus Parkstellung wieder herausschaltet und zwischendurch einen Taster betätigt.

Das Dokument JP 4763778 B2 ist als nächstliegender Stand der Technik nach dem Oberbegriff des Anspruchs 1 zu sehen.

Nachteilig ist hierbei, dass zur Festlegung der Zielposition eine spezielle, auf die Speicherung der Zielposition ausgerichtete, Bedienhandlung des Fahrlehrers erforderlich ist.

Es ist Aufgabe der vorliegenden Erfindung, eine verbesserte Lösung zur Überwindung dieser Nachteile des Stands der Technik bereitzustellen. Diese Aufgabe wird gelöst durch das Verfahren gemäß Anspruch 1, die Fahrerassistenzvorrichtung gemäß Anspruch 9, sowie das Kraftfahrzeug gemäß Anspruch 10.

Somit ist das erfindungsgemäße Verfahren eines zum autonomen Parken eines Kraftfahrzeugs, wobei zwischen einem sich außerhalb des Kraftfahrzeugs befindlichen Bediener und dem Kraftfahrzeug eine Kommunikationsverbindung besteht. Durch diese Kommunikationsverbindung ist zumindest ein Befehl zum Aktivieren des autonomen Parkvorgangs des Kraftfahrzeugs übertragbar. Bei dem erfindungsgemäßen Verfahren wird das Kraftfahrzeug a) vor Beginn des autonomen Parkvorgangs in eine Zielposition und danach in eine Startposition verbracht und die Zielposition und/oder zuletzt gefahrene Trajektorie des Kraftfahrzeugs wird oder werden in einer hierfür geeigneten Vorrichtung gespeichert, und das Kraftfahrzeug wird b) nach einer ersten Aktivierung des autonomen Parkvorgangs autonom von der Startposition aus anhand von den in der Vorrichtung gespeicherten Daten in die Zielposition geführt, wobei die Aktivierung über einen über die Kommunikationsverbindung übertragenen Befehl erfolgt.

Die Festlegung der Zielposition des autonomen Parkvorgangs erfolgt dabei in folgender Art und Weise: Die Position des letzten Richtungswechsels des Kraftfahrzeugs wird erfasst, d.h. die Position des Kraftfahrzeugs bevor vom Vorwärtsgang in den Rückwärtsgang oder andersherum gewechselt wird, und diese Position wird als Zielposition in der geeigneten Vorrichtung gespeichert.

Durch die Festlegung der Zielposition vor Beginn des autonomen Verbringens des Kraftfahrzeugs durch beispielsweise einen Insassen des Kraftfahrzeugs kann das Kraftfahrzeug sich autonom in die Zielposition bewegen und dies unabhängig von irgendwelchen Parametern bezüglich der Zielposition, die vorab auf dem System hinterlegt sein müssten.

Gemäß einer ersten vorteilhaften Weiterbildung der Erfindung kann die Festlegung der Zielposition des autonomen Verbringens zusätzlich dadurch erfolgen, dass durch eine geeignete Sensorvorrichtung des Kraftfahrzeugs eine die Zielposition umfassende Umgebung des Kraftfahrzeugs erfasst wird, diese einem Insassen des Kraftfahrzeugs signalisiert wird, und die Zielposition des Kraftfahrzeugs innerhalb der dass die Fahrzeugassistenzvorrichtung dazu eingerichtet ist, eines der erfindungsgemäßen Verfahren durchzuführen. Des Weiteren umfasst die vorliegende Erfindung ein Kraftfahrzeug mit einer solchen Fahrerassistenzvorrichtung.

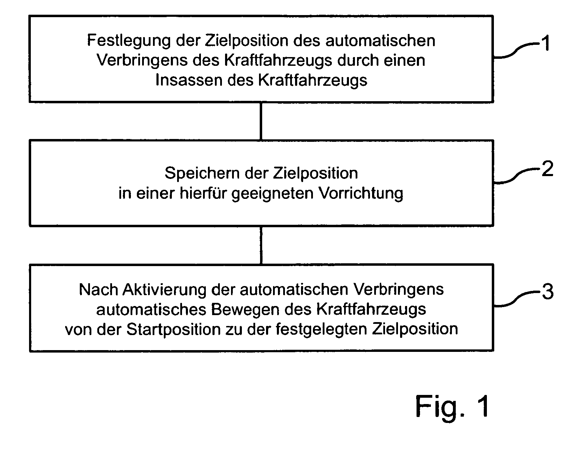

Die vorliegende Erfindung wird anhand der beigefügten Zeichnung näher erläutert.

Die Figur zeigt rein schematisch die kennzeichnenden Schritte einer der bevorzugten Ausführungsformen des erfindungsgemäßen Verfahrens.

Die nachfolgend näher geschilderten Ausführungsbeispiele stellen bevorzugte Ausführungsformen der vorliegenden Erfindung dar. Die vorliegende Erfindung ist selbstverständlich nicht auf diese Ausführungsformen beschränkt.

Wie oben bereits erwähnt, betrifft eine bevorzugte Ausführungsform der vorliegenden Erfindung unter anderem ein Verfahren zum autonomen Parken eines Kraftfahrzeugs von einer Startposition in eine Zielposition, wobei sich das Kraftfahrzeug nach einer Aktivierung des autonomen Verbringens autonom von der Startposition zu der Zielposition bewegt wird. Die bevorzugte Ausführungsform des erfindungsgemäßen Verfahrenes ist dadurch gekennzeichnet, dass vor Beginn des autonomen Parkens des Kraftfahrzeugs in die Zielposition die Zielposition des autonomen Verbringens durch einen Insassen des Kraftfahrzeugs festgelegt 1 und in einer hierfür geeigneten Vorrichtung gespeichert wird 2, und sich das Kraftfahrzeug nach einer ersten Aktivierung des autonomen Verbringens autonom von der Startposition zu der festgelegten Zielposition bewegt 3.

Die Festlegung der Zielposition durch einen Insassen des Kraftfahrzeugs 1 kann in vorteilhafter Weise beispielsweise dadurch erfolgen, dass der Fahrer zunächst die Zielposition (Parkposition) anfährt, und diese Zielposition im System (in einer geeigneten Vorrichtung) hinterlegt (temporär oder dauerhaft speichert) wird. Danach kann der Fahrer das Kraftfahrzeug wieder von der Zielposition (Parkposition) wegbewegen, beispielsweise zu einer Position in der Nähe der Zielposition (Parkposition), die ein bequemes Aussteigen der Insassen des Kraftfahrzeugs ermöglicht. Danach kann ein Bediener beispielsweise von außen (z.B. mittels einer Fernsteuereinrichtung) den autonomen Parkvorgang aktivieren und das Kraftfahrzeug fährt selbständig wieder den Weg auf die hinterlegte Parkposition zurück.

Durch diese Art der Festlegung der Zielposition des Kraftfahrzeugs 1 übernimmt der Fahrer oder ein anderer Insasse die Verantwortung, dass auf dem Weg zur Zielposition und an der Zielposition keine ungewollten Hindernisse vorhanden sind. Hierdurch sind die Anforderungen an die Sensorik geringer, als dies bei vollständig autonomen Systemen der Fall ist.

Eine andere vorteilhafte Möglichkeit zur Festlegung der Zielposition durch einen Insassen (Fahrer/Beifahrer) des Kraftfahrzeugs 1 ist, dass das Kraftfahrzeug in einer Position nahe der Zielposition abgestellt, durch eine geeignete Sensorvorrichtung des Kraftfahrzeugs eine die Zielposition umfassende Umgebung des Kraftfahrzeugs erfasst, diese Zielposition einem Insassen des Kraftfahrzeugs signalisiert, und die Zielposition des Kraftfahrzeugs innerhalb der erfassten Umgebung und die Trajektorie zur Zielposition durch den Insassen des Kraftfahrzeugs festgelegt und im System (geeignete Vorrichtung) hinterlegt (temporär oder dauerhaft gespeichert) wird.

Zur Erfassung der Zielposition können bei beiden oben erwähnten Alternativen verschiedene Sensorsysteme des Kraftfahrzeugs verwendet werden, beispielsweise wenigstens eine Kameravorrichtung (Surroundview-Kameras, Rückfahrkamera) Ultraschallsensorvorrichtung (Park Distance Control), Radarvorrichtung, Laserscanvorrichtung, (sofern eine ausreichende Genauigkeit der Positionsbestimmung gegeben ist) eine satellitengestützte Positionsbestimmung, etc.. Diese Sensorsysteme können selbstverständlich in Kombination verwendet werden und die Daten von verschiedenen Sensorsystemen können miteinander in Bezug gesetzt und/oder gegeneinander abgeglichen werden.

Beispielsweise kann die Position nahe der Zielposition eine sein, die ein bequemes Aussteigen ermöglicht. Die Sensorvorrichtung kann beispielsweise wenigstens eine Kameravorrichtung umfassen und das von der Kameravorrichtung erfasste Bild (das die Zielposition umfasst) wird einem Insassen auf einem Bildschirm (als Realbild oder bearbeitetes Bild) angezeigt. Er kann nun die finale Zielposition (Parkposition) und die Trajektorie dorthin in dem Kamerabild beispielsweise mit eingeblendeten grafischen Elementen wählen und bestätigen. Dies gilt sowohl für eine Zielposition (Parkposition) vor dem Auto (Kameravorrichtung beispielsweise mit Surroundview-Kameras), als auch für eine Position hinter dem Kraftfahrzeug (Kameravorrichtung beispielsweise mit Rückfahrkamera). Zur Auswahl und Bestätigung der Zielposition (Parkposition) und der Trajektorie können entweder geeignete Tasten (z.B. Stehen, Vorwärts, Rückwärts, Parken ein/aus, Lenken, Bestätigung Hindernis) im Fahrzeug und/oder der Lenkwinkel verwendet werden.

In vorteilhafter Weise werden die Startposition des Kraftfahrzeugs, die Trajektorie zur Zielposition sowie Daten über die Umgebung des Kraftfahrzeugs während des autonomen Verbringens des Kraftfahrzeugs in die Zielposition erfasst und in der Vorrichtung gespeichert.

Die Daten über die Umgebung des Kraftfahrzeugs können auch "weiche" Hindernisse, wie beispielsweise einen Busch, umfassen. Erfindungsgemäß kann der Insasse des Fahrzeugs, der die Zielposition und/oder die Trajektorie zur Zielposition festlegt, eine Berührung des Kraftfahrzeugs mit einem solchen "weichen" Hindernis beim autonomen Bewegen des Kraftfahrzeugs von der Startposition zur Zielposition (Einparken) oder beim autonomen Bewegen des Kraftfahrzeugs von der Zielposition zur Startposition (Ausparken) in Kauf nehmen oder sogar bewusst auswählen. Derartige weiche Hindernisse können durch die Umweltsensorik eines vollautonomen Systems derzeit nicht richtig bewertet werden.

Wenn die Daten bezüglich der Startposition des Kraftfahrzeugs, der Trajektorie in die Zielposition sowie Daten über die Umgebung des Kraftfahrzeugs während des autonomen Verbringens des Kraftfahrzeugs in die Zielposition gespeichert werden, stehen diese Daten für ein autonomes Verlassen der Zielposition (Ausparken) noch zur Verfügung. Daher kann in einem solchen Fall das Kraftfahrzeug sich nach einer zweiten Aktivierung des autonomen Verbringens autonom wieder in die Startposition, oder im Wesentlichen geradlinig nach vorne oder hinten bewegen.

Bei einem autonomen Verlassen der Zielposition (Ausparken) wird in vorteilhafter Weise durch wenigstens eine geeignete fahrzeugseitige Sensorvorrichtung überprüft, ob sich die Umgebung des Kraftfahrzeugs seit dem Verbringen des Kraftfahrzeugs in die Zielposition verändert hat. Sofern dies der Fall ist, kann in vorteilhafter Weise das Kraftfahrzeug seine Bewegung vor dem oder während des autonomen Verbringen(s) autonom unterbinden oder stoppen und die Veränderung signalisieren.
Ein Signalisieren einer Veränderung der Umgebung des Kraftfahrzeugs seit dem autonomen Verbringen in die Zielposition, beispielsweise ein neu geparktes Fahrzeug im Umfeld des Kraftfahrzeugs, kann beispielsweise durch eine Betätigung der Hupe und/oder durch eine Betätigung der Warnblinkanlage erfolgen. Auch kann ein solches Signalisieren durch ein Übertragung und Signalisieren von entsprechenden Daten von dem Kraftfahrzeug zu einer von dem Bediener betätigten Fernsteuereinrichtung erfolgen.

Das erfindungsgemäße Verfahren dient insbesondere zum autonomen Einparken und Ausparken eines Kraftfahrzeugs bei beengten Platzverhältnissen. Diese beengten Platzverhältnisse können nur eine Längsseite des Kraftfahrzeugs (z.B. Parkplatz entlang einer Mauer) oder auch beide Längsseiten des Kraftfahrzeugs (Kopfparkplatz) betreffen. Um in allen Fällen ein Aussteigen aller Insassen des Kraftfahrzeugs vor dem Beginn des autonomen Verbringens des Kraftfahrzeugs zu der Zielposition zu ermöglichen, muss es möglich sein, dass alle Insassen des Kraftfahrzeug dieses verlassen können bevor sich das Kraftfahrzeug für den Vorgang des autonomen Verbringens zu der Zielposition in Bewegung setzt. In ähnlicher Weise muss es möglich sein, dass sich das Kraftfahrzeug autonom von der Zielposition zur Startposition oder in einer im Wesentlichen geradlinigen Bewegung von der Zielposition weg bewegen kann, ohne dass vorher ein Insasse wieder in das Kraftfahrzeug einsteigen müsste.

Dies kann in besonders vorteilhafter Weise erreicht werden, wenn zwischen einem sich außerhalb des Kraftfahrzeugs befindlichen Bediener und dem Kraftfahrzeug eine drahtlose Kommunikationsverbindung besteht, durch welche zumindest ein Befehl zum Aktivieren des autonomen Verbringens des Kraftfahrzeugs oder ein anderer Steuerbefehl an das Kraftfahrzeug und/oder fahrzeugseitige Information an den Bediener übertragbar ist. Hierdurch kann die Aktivierung des autonomen Verbringens das Kraftfahrzeug in die Zielposition, die Aktivierung der Zurückbewegung des Kraftfahrzeugs in die Startposition und/oder die Aktivierung der im Wesentlichen geradlinigen Bewegung nach vorne oder hinten des Kraftfahrzeugs durch den Bediener außerhalb des Kraftfahrzeugs mit Hilfe einer drahtlosen Kommunikationseinrichtung erfolgen.

Zum Ausparken kann ein Bediener beispielsweise das autonome Verbringen von der Zielposition zu der Startposition per Funk von außen starten. Das Kraftfahrzeug bewegt sich daraufhin autonom zu der gespeicherten Startposition, die ein bequemes Einsteigen in das Kraftfahrzeug ermöglicht.
Ein Start des autonomen Verbringens (Bewegung zur und Bewegung von der Zielposition) kann beispielsweise durch einen Druck auf eine Taste oder eine Tastenkombination auf der Kommunikationseinrichtung erfolgen. Ebenso kann ein Stopp des Vorgangs des autonomen Verbringens durch einen Druck auf eine Taste oder eine Tastenkombination auf der Kommunikationseinrichtung erfolgen.

Zur Erhöhung der Sicherheit kann weiter vorgesehen sein, dass die Bewegung des Kraftfahrzeugs während des autonomen Verbringens (Bewegung zur und Bewegung von der Zielposition) gestoppt wird, sobald der Bediener ein vorbestimmte Bedienhandlungen auf der Kommunikationseinrichtung einstellt. Beispielsweise kann vorgesehen sein, dass der Bediener während des gesamten Vorgangs des autonomen Verbringens eine Taste oder eine Tastenkombination auf der Kommunikationseinrichtung gedrückt halten muss. Sobald die Taste oder die Tastenkombination nicht mehr gedrückt wird, stoppt das Kraftfahrzeug seine Bewegung. Auch kann beispielsweise vorgesehen sein, dass während des autonomen Verbringens des Kraftfahrzeugs auf einer Kommunikationseinrichtung mit einem berührungsempfindlichen Bildschirm (Touchdisplay) der Bediener kontinuierlich oder zumindest in vergleichsweise kurzen Abständen eine bestimmte Bewegung über den Bildschirm (beispielsweise Wischen oder Kreisen) durchführen muss, damit das autonome Verbringen nicht gestoppt wird (im Sinne einer "Totmannsteuerung").

## Patentansprüche

1. Verfahren zur Durchführung eines autonomen Parkvorgangs eines Kraftfahrzeugs, mit folgenden Schritten:
- das Kraftfahrzeug wird vor Beginn des autonomen Parkvorgangs in eine Zielposition verbracht und aus der Zielposition in eine Startposition verbracht, wobei die Zielposition und/oder eine zuletzt gefahrene Trajektorie des Kraftfahrzeugs in einer hierfür geeigneten Vorrichtung gespeichert wird oder werden,
- das Kraftfahrzeug wird nach einer ersten Aktivierung des autonomen Parkvorgangs anhand von in der Vorrichtung gespeicherten Daten autonom von der Startposition in die Zielposition geführt, wobei die Aktivierung über einen Befehl erfolgt, der über eine Kommunikationsverbindung von einem sich außerhalb des Kraftfahrzeugs befindlichen Bediener zum Kraftfahrzeug übertragen wird,
**dadurch gekennzeichnet, dass**
- zur Festlegung der Zielposition des autonomen Parkvorgangs die Position des Kraftfahrzeugs beim letzten Richtungswechsel Kraftfahrzeugs erfasst wird und als Zielposition in der Vorrichtung gespeichert wird.

2. Verfahren nach Anspruch 1,
**dadurch gekennzeichnet, dass**
die Festlegung der Zielposition des autonomen Parkvorgangs zusätzlich erfolgen kann, indem durch eine geeignete Sensorvorrichtung des Kraftfahrzeugs eine die Zielposition umfassende Umgebung des Kraftfahrzeugs erfasst wird, diese einem Insassen des Kraftfahrzeugs signalisiert wird, und die Zielposition des Kraftfahrzeugs innerhalb der erfassten Umgebung und die Trajektorie zur Zielposition durch den Insassen des Kraftfahrzeugs festgelegt und in der Vorrichtung gespeichert werden.

3. Verfahren nach Anspruch 1 oder 2,
**dadurch gekennzeichnet, dass**
die Startposition des Kraftfahrzeugs, die Trajektorie zur Zielposition sowie Daten über die Umgebung des Kraftfahrzeugs während des autonomen Parkvorgangs des Kraftfahrzeugs in die Zielposition erfasst und in der Vorrichtung gespeichert werden.

4. Verfahren nach Anspruch 3,
**dadurch gekennzeichnet, dass**
das Kraftfahrzeug nach einer zweiten Aktivierung des autonomen Parkvorgangs sich autonom
- wieder in die Startposition bewegt, oder
- im Wesentlichen geradlinig nach vorne oder hinten bewegt.

5. Verfahren nach Anspruch 4,
**dadurch gekennzeichnet, dass**
- durch wenigstens eine geeignete fahrzeugseitige Sensorvorrichtung überprüft wird, ob sich die Umgebung des Kraftfahrzeugs seit dem Parkvorgang des Kraftfahrzeugs in die Zielposition verändert hat; und
- das Kraftfahrzeug seine Bewegung vor dem oder während des autonomen Parkvorgangs bei einer Veränderung der Umgebung autonom unterbindet oder stoppt und die Veränderung signalisiert.

6. Verfahren nach einem der vorhergehenden Ansprüche,
**dadurch gekennzeichnet, dass**
die Aktivierung des autonomen Parkvorgangs das Kraftfahrzeug in die Zielposition, die Aktivierung der Zurückbewegung des Kraftfahrzeugs in die Startposition und/oder die Aktivierung der Wesentlichen geradlinigen Bewegung nach vorne oder hinten des Kraftfahrzeugs durch den Bediener außerhalb des Kraftfahrzeugs mit Hilfe einer drahtlosen Kommunikationseinrichtung erfolgt.

7. Verfahren nach Anspruch 6,
**dadurch gekennzeichnet, dass**
die Bewegung des Kraftfahrzeugs während des autonomen Parkvorgangs gestoppt wird, sobald der Bediener ein vorbestimmte Bedienhandlungen auf der Kommunikationseinrichtung einstellt.

8. Verfahren nach Anspruch 7,
**dadurch gekennzeichnet, dass**
das Kraftfahrzeug während des autonomen Parkvorgangs in der gespeicherten Startposition fährt, sobald der Bediener eine vorbestimmte Bedienhandlung auf der Kommunikationseinrichtung einstellt.

9. Fahrerassistenzvorrichtung, die mit Steuer- und Sensoreinrichtungen eines Kraftfahrzeugs verbindbar ist,
**dadurch gekennzeichnet, dass**
die Fahrzeugassistenzvorrichtung dazu eingerichtet ist, eines der Verfahren nach den Ansprüche 1 bis 8 durchzuführen.

10. Kraftfahrzeug mit einer Fahrerassistenzvorrichtung nach Anspruch 9.

## Claims

1. Method for performing an autonomous parking operation of a motor vehicle, the method comprising the following steps:
- before the start of the autonomous parking operation, the motor vehicle is brought into a target position and from the target position into a starting position, wherein the target position and/or a most recently travelled trajectory of the motor vehicle is/are stored in a device suitable for this purpose,
- following a first activation of the autonomous parking operation, the motor vehicle is autonomously guided from the starting position into the target position using data stored in the device, wherein the activation ensues via a command transmitted via a communication link from an operator located outside of the motor vehicle to the motor vehicle, **characterised in that**
- in order to determine the target position of the autonomous parking operation, the position of the motor vehicle at its last change of direction is detected and stored in the device as a target position.

2. Method according to claim 1,
**characterised in that**
the target position of the autonomous parking operation can additionally be determined by providing that an environment of the motor vehicle which includes the target position is detected by a suitable sensor device of the motor vehicle, that this is signalled to an occupant of the motor vehicle and that the target position of the motor vehicle within the detected environment and the trajectory to the target position are determined by the occupant of the motor vehicle and stored in the device.

3. Method according to claim 1 or 2,
**characterised in that**
the starting position of the motor vehicle, the trajectory to the target position and data on the environment of the motor vehicle are detected and stored in the device during the autonomous parking operation of the motor vehicle into the target position.

4. Method according to claim 3,
**characterised in that**
following a second activation of the autonomous parking operation, the motor vehicle autonomously
- returns into the starting position, or
- performs a substantially straight forward or backward movement.

5. Method according to claim 4,
**characterised in that**
- at least one suitable vehicle-side sensor device checks whether the environment of the motor vehicle has changed since the parking operation of the motor vehicle into the target position; and
- the motor vehicle autonomously prevents or stops its movement before or during the autonomous parking operation if there is a change in the environment and signals the change.

6. Method according to any of the preceding claims,
**characterised in that**
the activation of the autonomous parking operation of the motor vehicle into the target position, the activation of the return of the motor vehicle into the starting position and/or the activation of the substantially straight forward or backward movement of the motor vehicle is/are carried out by the operator outside the motor vehicle with the aid of a wireless communication device.

7. Method according to claim 6,
**characterised in that**
the movement of the motor vehicle during the autonomous parking operation is stopped as soon as the operator sets predetermined operating actions on the communication device.

8. Method according to claim 7,
**characterised in that**
the motor vehicle travels during the autonomous parking operation in the stored starting position as soon as the operator sets a predetermined operating action on the communication device.

9. Driver assistance device connectable to control and sensor devices of a motor vehicle,
**characterised in that**
the driver assistance device is designed for carrying out one of the methods according to claims 1 to 8.

10. Motor vehicle with a driver assistance device according to claim 9.

## Revendications

1. Procédé d'exécution d'un processus de stationnement autonome d'un véhicule automobile, comprenant les étapes suivantes :
- le véhicule automobile est amené avant le commencement du processus de stationnement autonome dans une position cible et amené à partir d'une position cible dans une position de démarrage, la position cible et/ou une trajectoire parcourue précédemment par le véhicule automobile est ou sont mémorisée(s) dans un dispositif prévu à cet effet,
- le véhicule automobile est amené de manière autonome après une première activation du processus de stationnement autonome, de la position de démarrage dans la position cible à l'aide des données mémorisées dans le dispositif, l'activation s'effectuant au moyen d'une instruction, qui est transmise par une liaison de communication d'un utilisateur se trouvant à l'extérieur du véhicule automobile, **caractérisé en ce que**
- pour la détermination de la position cible du processus de stationnement autonome la position du véhicule automobile est détectée lors du dernier changement de direction du véhicule automobile et est mémorisée en tant que position cible dans le dispositif.

2. Procédé selon la revendication 1, **caractérisé en ce que** la détermination de la position cible du processus de stationnement autonome peut s'effectuer en outre **en ce qu'**un environnement comprenant la position cible du véhicule automobile est détecté par un dispositif de capteur adapté du véhicule automobile, qui est indiqué à l'occupant du véhicule automobile, et la position cible du véhicule automobile à l'intérieur de l'environnement détecté et la trajectoire vers la position cible sont déterminées par l'occupant du véhicule automobile et mémorisées dans le dispositif.

3. Procédé selon la revendication 1 ou la revendication 2, **caractérisé en ce que** la position de démarrage du véhicule automobile, la trajectoire vers la position cible ainsi que les données concernant l'environnement du véhicule automobile pendant le processus de stationnement autonome du véhicule automobile dans la position cible sont détectées et mémorisées dans le dispositif.

4. Procédé selon la revendication 3, **caractérisé en ce que** le véhicule automobile, après une seconde activation du processus de stationnement autonome,
- se déplace de manière autonome dans la position de démarrage, ou
- se déplace sensiblement en ligne droite vers l'avant ou vers l'arrière.

5. Procédé selon la revendication 4, **caractérisé en ce qu'**
- il est déterminé par au moins un dispositif de capteur adapté coté véhicule contrôle si l'environnement du véhicule automobile s'est modifié depuis le processus de stationnement du véhicule automobile dans la position cible ; et
- le véhicule automobile entrave son déplacement avant ou pendant le processus de stationnement autonome lors d'une modification de l'environnement ou s'arrête et indique la modification.

6. Procédé selon l'une quelconque des revendications précédentes, **caractérisé en ce que** l'activation du processus de stationnement autonome du véhicule automobile dans la position cible, l'activation du mouvement arrière du véhicule automobile dans la position de démarrage et/ou l'activation du mouvement sensiblement en ligne droite vers l'avant ou vers l'arrière du véhicule automobile s'effectue par l'utilisateur à l'extérieur de véhicule automobile à l'aide d'un dispositif de communication sans fil.

7. Procédé selon la revendication 6, **caractérisé en ce que** le mouvement du véhicule automobile est interrompu pendant le processus de stationnement automobile dès que l'utilisateur règle des opérations de commande prédéfinies dans le dispositif de communication.

8. Procédé selon la revendication 7, **caractérisé en ce que** le véhicule automobile se déplace pendant le processus de stationnement autonome dans la position de démarrage mémorisée, dès que l'utilisateur règle une opération de commande prédéfinie dans le dispositif de communication.

9. Dispositif d'assistance au conducteur, qui peut être relié aux dispositifs de capteur et de commande d'un véhicule automobile, **caractérisé en ce que** le dispositif d'assistance au conducteur est conçu pour mettre en oeuvre l'une des revendications 1 à 8 du procédé.

10. Véhicule automobile comprenant un dispositif d'assistance au conducteur selon la revendication 9.
